# EUROPEAN PATENT APPLICATION

(11) **EP 1 921 811 A2**
(43) Date of publication of application: **14.05.2008**
(21) Application number: 07254440.6
(22) Date of filing: 13.11.2007
(51) Int. Cl.: H04L 12/56

(54) **Radio network controller and routing method**

(30) Priority: 13.11.2006 JP 2006306551
(71) Applicant: NEC Corporation, Minato-ku Tokyo 108 (JP)
(72) Inventor: Nakata, Atsushi, Tokyo 108-8001 (JP)
(74) Representative: Moir, Michael Christopher

(57) **Abstract**

A radio network controller is connected to radio base station equipment for communicating with communication terminals and also is connected to a plurality of core nodes that perform connecting processes of the same kind, and includes: for each of the core nodes, a storage for storing accommodation information that represents the capacity of the core node for accommodating the communication terminals; and a processor which, when receiving a connection request from the communication terminal by way of the radio base station equipment, selects a core node to which the connection request is supplied, from the plurality of core nodes, in accordance with the accommodation information stored in the storage, and routes the connection request to the selected core node.

## Description

This application is based upon and claims the benefit of priority from Japanese patent application No. 2006-306551, filed on November 13, 2006, the disclosure of which is incorporated herein in its entirety by reference.

### BACKGROUND OF THE INVENTION

### 1. Field of the Invention

The present invention relates to a radio network controller and routing method, in particular, relating to a radio network controller and routing method for selecting a core node, to which a connection request transmitted from a communication terminal should be transmitted, from a plurality of core nodes.

### 2. Description of the Related Art

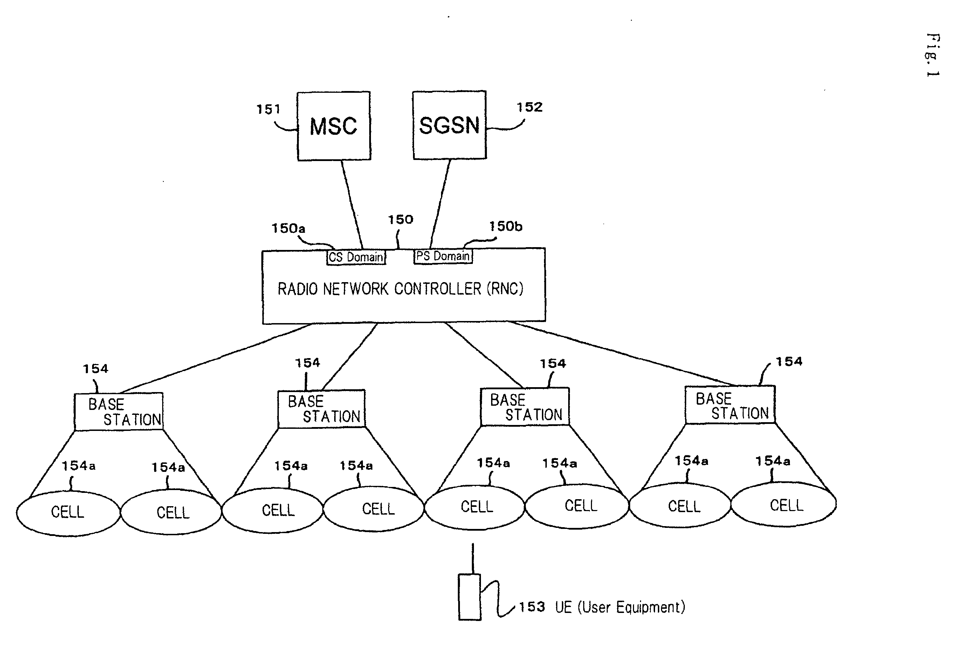

Referring to FIG. 1, architecture between a radio network controller (which will be referred to hereinbelow as "RNC") and core nodes (which will be referred to hereinbelow as "CNs") will be described.

In FIG. 1, RNC 150 is connected to one CN for every domain, for example, CS Domain (Circuit Service Domain) and PS Domain (Packet Service Domain).

Specifically, RNC 150 includes CS Domain (functioning unit) 150a and PS Domain (functioning unit) 150b. CS Domain 150a is connected to a single MSC (Mobile Switching Center) 151. PS Domain 150b is connected to a single SGSN (Serving GPRS support node) 152.

MSC 151 performs circuit switching (e.g., processing of transmission and reception of sound data and call processing). SGSN 152 performs packet switching (e.g., processing of transmission and reception of packet data).

When RNC 150 receives a connection request, which designates a CS Domain, from UE (User Equipment) 153 by way of a base station 154, RNC 150 routes the connection request to single MSC 151 that is connected to RNC 150. When RNC 150 receives a connection request, which designates PS Domain, from UE 153, RNC 150 routes the connection request to single SGSN 152 that is connected to RNC 150.

On the other hand, there is an lu Flex technology, in which the RNC establishes connections with a plurality of CNs for each domain (e.g., for CS Domain and for PS Domain).

RNC 150 that is shown in FIG. 1 routes the connection request to a CN that is uniquely designated for each domain. Accordingly, there occurs the problem that RNC 150 cannot perform routing that supports lu Flex.

Patent document 1 (JP-2006-197653A) and patent document 2 (JP-2004-166197A) disclose RNCs that can solve the above problem.

The RNC disclosed in patent document 1 is able to establish connection to a plurality of CNs. This RNC, when receiving an operator ID from a UE, selects a CN node to be connected to the UE, based on the operator ID. Here, an operator ID is related beforehand to CNs that can be used with the operator ID.

Further, under the circumstances in which two or more support nodes for providing a service are in a common routing area, if the SGSN, which has already been used, has come to be overloaded or has broken down, this RNC (RNC which possibly should have a list of available SGSNs) can use another SGSN. Accordingly, this RNC can show the recovery effect. Further, it is also possible for this RNC to perform maintenance operations such as software updating and the like without shutting down the area.

Patent document 2 discloses a description regarding lu Flex. In patent document 2, there is a description of an RNC which selects a CN to which a UE should be connected, taking into account the load on CNs.

In patent document 1, there is no specific description regarding the algorithm of routing a connection request from a wireless terminal to any one of multiple CNs having the same ID with the operator ID.

Accordingly, for example, under the circumstances in which the number of UEs that are accommodated in a CN is used as the load on the CN, if each CN has a different UE-accommodation capacity, it is impossible for the RNC to route UEs (specifically, connection requests) in a well-balanced manner in accordance with the UE-accommodation capacities of individual CNs.

Taking into account the load on CNs, the RNC that is described in patent document 2 selects a CN to which a UE should be connected. However, there is no specific reference to the load on CNs in patent document 2.

Accordingly, for example, under the circumstances in which the number of UEs accommodated in a CN is used as the load on the CN, if each CN has a different UE-accommodation capacity, it is impossible for the RNC to route UEs (specifically, connection requests) in a well-balanced manner in accordance with the UE-accommodation capacities of individual CNs.

### SUMMARY OF THE INVENTION

An exemplary object of the present invention is to provide a radio network controller and routing method which enables well-balanced routing of connection requests in accordance with the UE-accommodation capacities of individual CNs.

A radio network controller according to an exemplary aspect of the invention is connected to radio base station equipment for communicating with communication terminals, the radio network controller is connected to a plurality of core nodes that perform connecting processes of the same kind, the radio network controller includes: a storage for storing accommodation information that represents capacity of the core node for accommodating the communication terminals, for each of the core node; and a processor, when receiving a connection request from the communication terminal by way of the radio base station equipment, for selecting a core node to which the connection request should be supplied, from the multiple core nodes, in accordance with the accommodation information stored in the storage, and for routing the connection request to the selected core node.

Preferably the storing means further stores circuit information for each core node that represents whether circuit status of the core node is normal or not; and preferably the processing means, when receiving said connection request, selects a core node to which said connection request should be supplied, from said multiple core nodes, in accordance with the accommodation information and circuit information stored in said storing means, and routes said connection request to the selected core node. Preferably the radio network controller further comprises managing means for managing connecting terminal count information that represents the number of communication terminals being accommodated in the core node for each core node, preferably wherein the processing means, when receiving said connection request, selects a core node to which said connection request should be supplied, from said multiple core nodes, in accordance with the accommodation information and circuit information stored in said storing means and the connecting terminal count information managed by said managing means, and routes said connection request to the selected core node.

Preferably the processing means, when receiving an overload message transmitted from a core node whose processing load exceeds range of permissible processing load, sets the accommodation information in the core node that transmitted the overload message, to the smallest value during a fixed length of time after reception of the message.

A method according to an exemplary aspect of the invention is used by a radio network controller that is connected to radio base station equipment for communicating with communication terminals and that is also connected to a plurality of core nodes that perform connecting processes of the same kind, the radio network controller includes a storage for storing accommodation information that represents the capacity of the core node for accommodating the communication terminals for each of the core node, the routing method includes: when receiving a connection request from the communication terminal by way of the radio base station equipment, selecting a core node to which the connection request should be supplied, from the multiple core nodes, in accordance with the accommodation information stored in the storage; and routing the connection request to the selected core node.

Preferably the storing means further stores circuit information for each core node that represents whether circuit status of the core node is normal or not; and preferably the selecting includes, when receiving said connection request, selecting a core node to which said connection request should be supplied, from said multiple core nodes, in accordance with the accommodation information and circuit information stored in said storing means.

Preferably the radio network controller further comprises managing means for managing connecting terminal count information that represents the number of communication terminals accommodated in the core node for each core node, and preferably the selecting includes, when receiving said connection request, selecting a core node to which said connection request should be supplied, from said multiple core nodes, in accordance with the accommodation information and circuit information stored in said storing means and the connecting terminal count information managed by said managing means.

Preferably the routing method further comprises: when receiving an overload message transmitted from a core node whose processing load exceeds range of permissible processing load, setting the accommodation information in the core node, that transmitted the overload message, to the smallest value during a fixed length of time after reception of the message.

The above and other objects, features, and advantages of the present invention will become apparent from the following description with reference to the accompanying drawings which illustrate an example of the present invention.

### BRIEF DESCRIPTION OF THE DRAWINGS

FIG. 1 is a block diagram showing a wireless communication system including an associated RNC;
FIG. 2 is a block diagram showing a wireless communication system including a RNC of the first exemplary embodiment according to the present invention;
FIG. 3 is a block diagram showing an example of RNC 1
FIG. 4 is an illustrative diagram showing an exemplary embodiment of table 11 a;
FIG. 5 is an illustrative diagram showing an exemplary embodiment of table 11b;
FIG. 6 is an illustrative diagram showing routing information in an initial CN connection request;
FIG. 7A is a flow chart for illustrating the operation of RNC 1;
FIG. 7B is a flow chart for illustrating the operation of RNC 1;
FIG. 8 is an illustrative diagram showing an exemplary embodiment of storage 11;
FIG. 9 is an illustrative diagram showing an exemplary embodiment of storage 11;
FIG. 10 is a block diagram showing an exemplary embodiment of RNC 1A of the second exemplary embodiment according to the present invention;
FIG. 11 is an illustrative diagram showing an exemplary embodiment of manager 1A1 and storage 11;
FIG. 12A is a flow chart for illustrating the operation of RNC 1A;
FIG. 12B is a flow chart for illustrating the operation of RNC 1A;
FIG. 13 is an illustrative diagram showing an exemplary embodiment of manager 1A1 and storage 11;
FIG. 14 is an illustrative diagram showing an exemplary embodiment of manager 1A1 and storage 11; and
FIG. 15 is a block diagram for illustrating a RNC of the third exemplary embodiment.

### DESCRIPTION OF THE EXEPLARY EMBODIMENT(S)

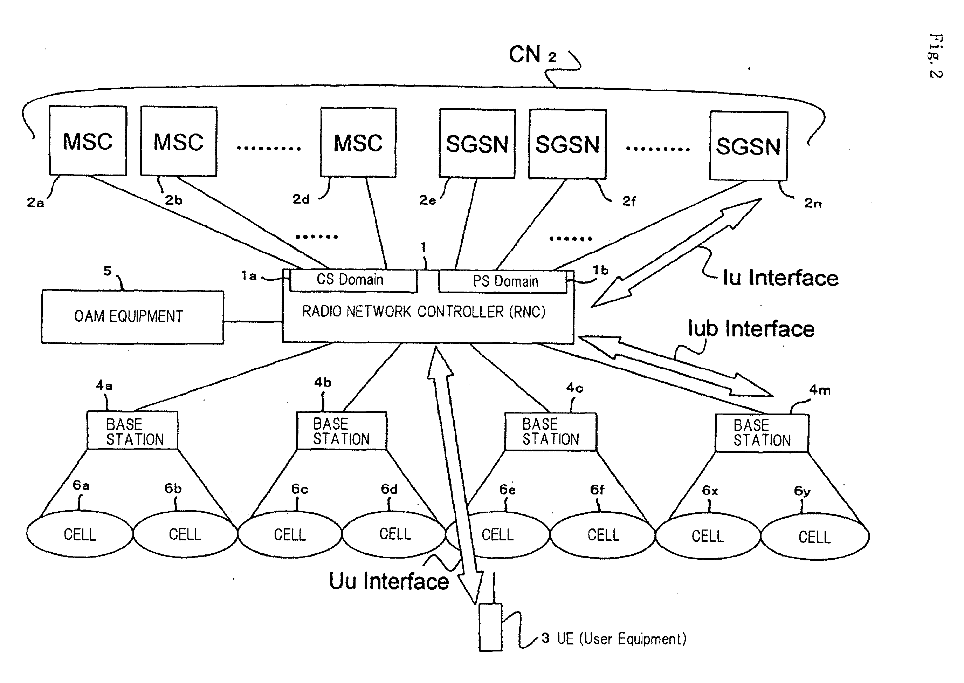

FIG. 2 is a block diagram showing a wireless communication system including a radio network controller according to a first exemplary embodiment of the present invention.

In FIG. 2, the wireless communication system includes: radio network controller (which will be referred to hereinbelow as "RNC") 1, a plurality of core nodes (which will be referred to hereinbelow as "CNs") 2, wireless communication terminal (User Equipment, which will be referred to as hereinbelow as "UE") 3, radio base station equipment (which will be referred to as hereinbelow as "Node-B) 4a to 4m and OAM (operator and maintenance) equipment 5.

Here, a wireless communication terminal can also be generally mentioned as a communication terminal.

In the exemplary embodiment, MSCs 2a to 2d and SGSNs 2e to 2n are regarded as multiple CNs. MSC 2a to 2d perform circuit switching including connection processing etc. (e.g., processing for transmission and reception of sound data and call processing). SGSNs 2e to 2n perform packet switching including connection processing etc. (e.g., processing for transmission and reception of packet data).

RNC 1 uses lu Flex that enables connections with a plurality of CNs in the same domain. For example, RNC 1 includes an lu interface for connections with a plurality of CNs having the same domain.

Specifically, RNC 1 includes CS Domain (functioning unit) 1 a and PS Domain (functioning unit) 1b. CS Domain 1 a includes an lu interface for connections with MSCs 2a to 2d. PS Domain 1b includes an lu interface for connections with SGSNs 2e to 2n.

Also, RNC 1 is connected to Node-Bs 4a to 4m which are capable of communicating with UE 3. RNC 1 controls a lub interface for connection with Node-Bs 4a to 4m and communication areas (cells) 6a to 6y and also controls a Uu interface for connection with UE 3.

RNC 1 is also connected to OAM equipment 5.

OAM equipment 5 is controlled by the operator. OAM equipment 5 provides information that is input by the operator to RNC 1. RNC 1 holds the information provided from OAM equipment 5.

For example, OAM equipment 5 provides accommodation information and circuit information on each CN, which were input by the operator, to RNC 1. Here, accommodation information represents the capacity (e.g. capacity ratio) of each CN for accommodating UEs. Circuit information represents whether the circuit status of each CN 2 is normal or not.

Here, OAM equipment 5 can modify the information (e.g., accommodation information and circuit information) in RNC 1, based on the operator's input.

RNC 1, when receiving an initial CN connection request (RRC: Initial Direct Transfer Message) for CN 2, via any one of Node-Bs, select one of CNs 2 to which the CN connection request should be supplied, based on the UE capacity ratios (accommodation information) and circuit statuses (circuit information) of individual CNs 2a to 2n. This will be detailed next.

RNC 1 holds the UE-capacity ratio (accommodation information) and CN circuit status (circuit information) that are input for every CN by the operator via OAM equipment 5.

Accordingly, when RNC 1 is able to select a CN to which the CN connection request from UE 3 is supplied, RNC 1 can select a CN, to which the CN connection request is supplied, in accordance with the UE capacity ratios of individual CNs, from the CNs having normal circuit status and can route the CN connection request to the selected CN.

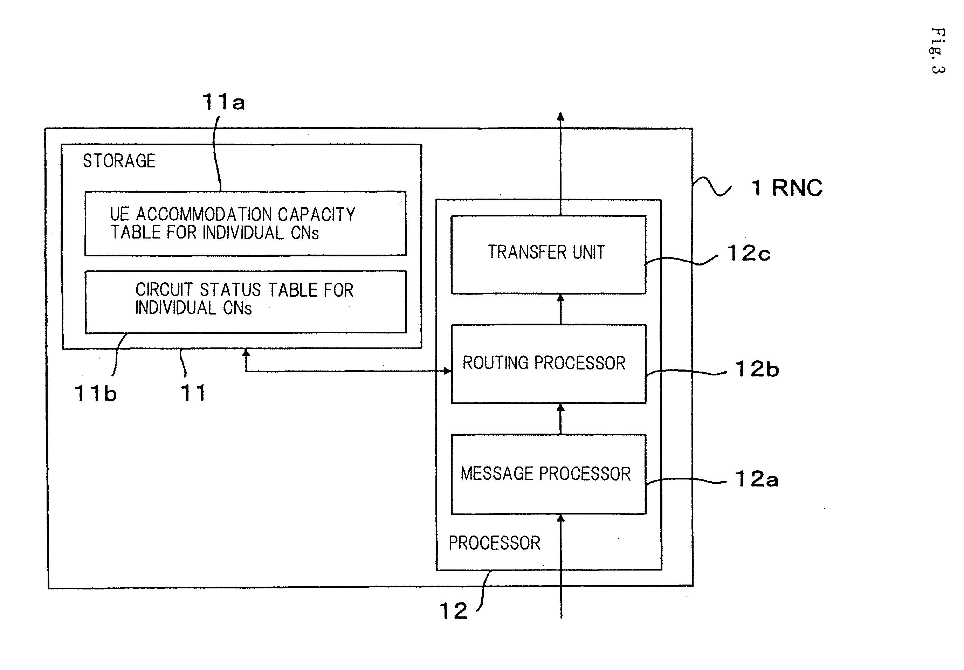

FIG. 3 is a block diagram showing an exemplary embodiment of RNC 1.

In FIG. 3, RNC 1 includes storage 11 such as a memory etc. and processor 12 such as a CPU etc. Processor 12 includes message processor 12a, routing processor 12b and transfer unit 12c.

Storage 11 can be generally mentioned as storing means. Processor 12 can be generally mentioned as processing means.

Storage 11 holds UE accommodation capacity table for individual CNs (which will be referred to simply as "table") 11 a and holds circuit status table for individual CNs (which will be referred to simply as "table") 11 b.

Table 11a represents the UE capacity ratio (accommodation information) for every CN, input through OAM equipment 5 by the operator. Table 11 b represents the circuit status ratio (circuit information) for every CN, input through OAM equipment 5 by the operator.

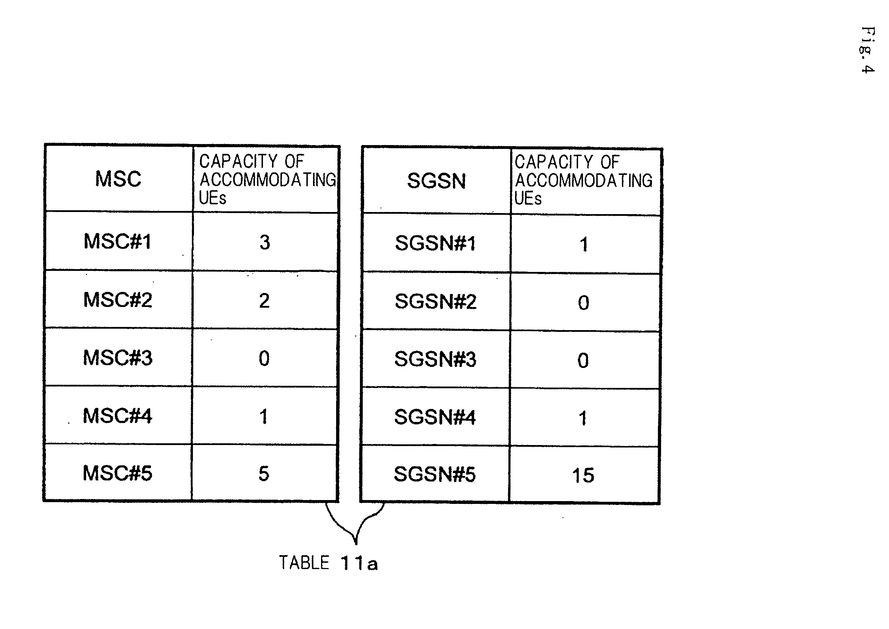

FIG. 4 is an illustrative diagram showing an exemplary embodiment of table 11a.

In FIG. 4, the accommodation information (Weight Factor) representing the capacity of accommodating UEs is held for every CN (MSC and SGSN) in table 11a. Here, the valid values for the Weight Factor range from 0 to 15 (15 is an appropriate figure).

In the example of FIG. 4, five MSCs are connected to RNC 1. The Weight Factor of MSC #1 is "3". The Weight Factor of MSC #2 is "2". The Weight Factor of MSC #3 is "0". The Weight Factor of MSC #4 is "1". The Weight Factor of MSC #5 is "5".

The operator inputs through OAM equipment 5 these MSC Weight Factors in accordance with the UE capacity ratios of the MSCs or the processing capacity ratios of the individual MSCs.

Also, in the example of FIG. 4, five SGSNs are connected to RNC 1. The Weight Factor of SGSN #1 is "1". The Weight Factor of SGSN #2 is "0". The Weight Factor of SGSN #3 is "0". The Weight Factor of SGSN #4 is "1". The Weight Factor of SGSN #5 is "15".

The operator inputs through OAM equipment 5 these SGSN Weight Factors in accordance with the UE capacity ratios of the SGSNs or the processing capacity ratios of the individual SGSNs.

When the UE capacity ratio of each CN is input by the operator, the UE capacity ratio of each CN is immediately updated in table 11a. When Weight Factor=0, the corresponding CN (MSC or SGSN) is prevented from being connected to UE other than those that have been connected. This means that "Weight Factor=0" causes RNC 1 to reduce the load on that CN.

In the example of FIG. 4, when MSC #3 is left out, RNC 1 can make adjustment of connection so that a UE to be accommodated in a MSC is connected to one of the normal MSCs other than MSC #3.

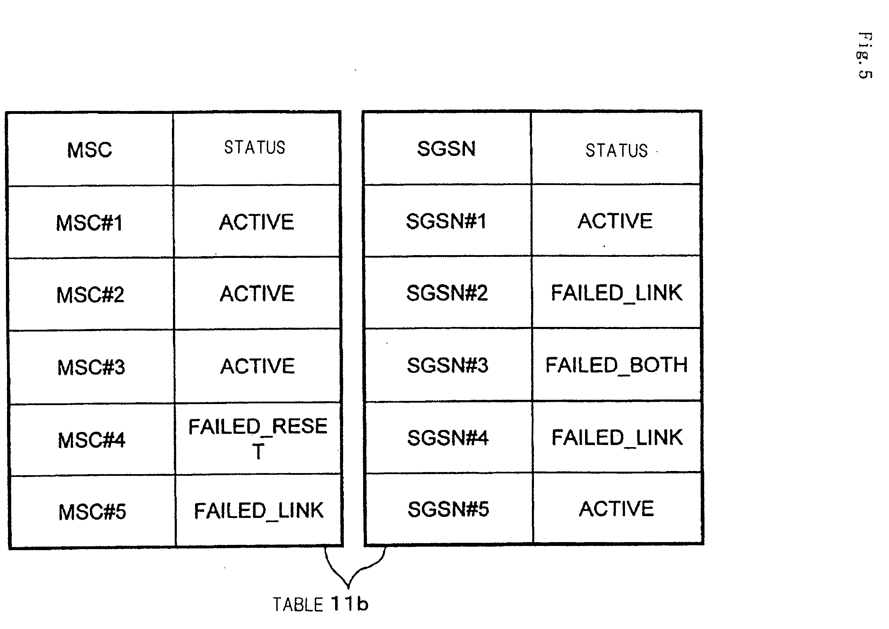

FIG. 5 is an illustrative diagram showing an exemplary embodiment of table 11b.

In FIG. 5, circuit information representing whether the circuit status of each CN is normal or not (ACTIVE, FAILED_LINK, FAILED_RESET, FAILED_BOTH) is stored for every CN (MSC and SGSN) in table 11 b.

"ACTIVE" represents that the circuit status of the associated CN (MSC or SGSN) is normal.

"FAILED_LINK" represents that the circuit status of the associated CN (MSC or SGSN) is an anomaly and that the CN is not connectable.

"FAILED_RESET" represents that the circuit status of the associated CN (MSC or SGSN) is normal but that the CN is in the course of performing a RESET procedure started by instructions from the CN or RNC.

"FAILED_BOTH" represents that a circuit anomaly has been detected in the course of a RESET procedure.

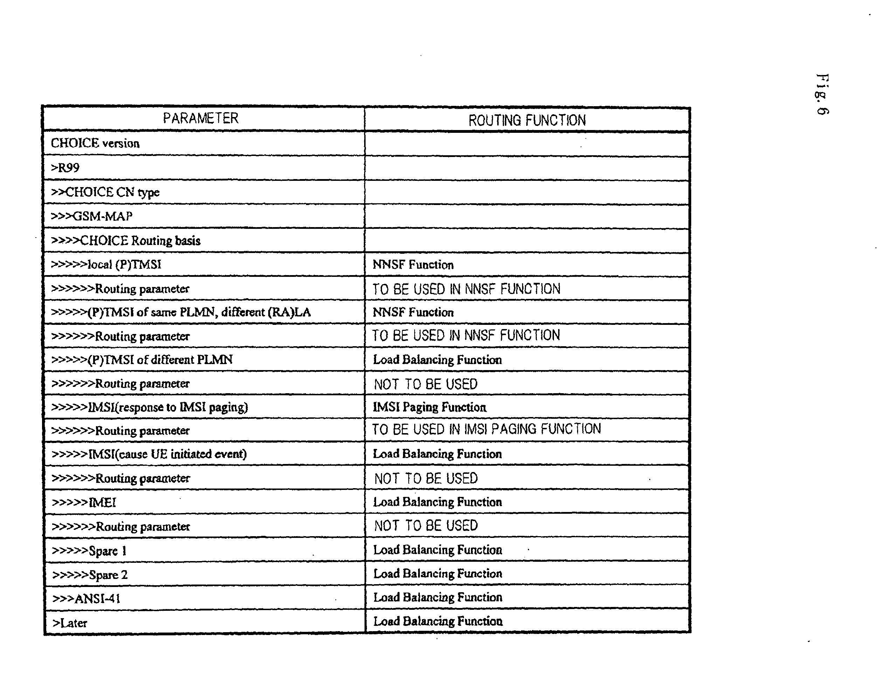

FIG. 6 is an illustrative diagram showing routing information (Intra Domain NAS Node Selector) included in an initial CN connection request from UE 3.

When version is set with R99, the CN type is set with GSM-MAP and the routing basis is set with Local(P)TMSI, (P)TMSI of same PLMN or different (RA)LA, RNC 1 executes NAS Node Selection Function (which will be referred to hereinbelow as NNSF). Specifically, RNC 1 first selects a unique CN to be connected, from the multiple CNs that are connected to RNC 1, in accordance with the Routing Parameter. Subsequently, RNC 1 routes the initial CN connection request to that CN.

When version is set with R99, the CN type is set with GSM-MAP and the routing basis is set with IMSI (response to IMSI paging) and the CN domain identity of the CN connection request (RRC: Initial Direct Transfer message) is set with CS Domain, RNC 1 executes a CS IMSI Paging Function. Specifically, RNC 1 selects a unique CN to be connected, from the multiple CNs that are connected to RNC 1, in accordance with the Routing Parameter. Subsequently, RNC 1 routes the initial CN connection request to that CN.

Under the circumstances in which version is set with R99 and the CN type is set with GSM-MAP, when the routing basis is not set with Local(P)TMSI, (P)TMSI of same PLMN or different (RA)LA, or when the routing basis is set with IMSI (response to IMSI paging) and the CN domain identity is not set with CS Domain, RNC 1 selects the CN to which routing will be made based on the Load Balancing Algorithm Function.

In other words, when the routing basis is set with (P)TMSI of different PLMN, when the routing basis is set with IMSI (response to IMSI paging) and the CN domain identity is set with PS Domain, when the routing basis is set with IMSI (cause UE initiated event), IMEI, Spare 1 or Spare 2, when the CN type is set with ANSI-41, or when the version is set with Later, RNC 1 selects the CN to which routing will be made based on Load Balancing Algorithm Function.

In the exemplary embodiment, in this Load Balancing Algorithm Function, RNC 1 takes into account the UE accommodation capacity ratio of every CN and the circuit status of every CN. This is one of the features of the exemplary embodiment.

Returning to FIG. 3, processor 12, when receiving a CN connection request from UE 3 by way of Node-B, selects a CN to which the CN connection request should be supplied, from a plurality of CNs connected to RNC 1, based on the capacity information in storage 11. Processor 12 routes the CN connection request to the selected CN.

In further detail, processor 12, upon reception of a CN connection request, selects a CN to which the CN connection request should be supplied, from a plurality of CNs connected to RNC 1, based on the capacity information and circuit information in storage 11. Processor 12 routes the CN connection request to the selected CN.

Message processor 12a analyzes the CN connection request received from UE 3. Message processor 12a provides the analyzed result and CN connection request to routing processor 12b. For example, message processor 12a checks the CN domain identity and routing information, indicated by the CN connection request.

Upon receipt of the analyzed result from message processor 12a, routing processor 12b selects a CN to which the CN connection request should be supplied, referring to information in storage 11 in accordance with the analyzed result. Routing processor 12b supplies the selection result and the CN connection request to transfer unit 12c.

Upon receipt of the selected result and CN connection request from routing processor 12b, transfer unit 12c transfers the CN connection request to the CN indicated by the selection result.

Though the configuration of the exemplary embodiment has been described in detail, the technique whereby the operator modifies some of the internal data in RNC 1 using OAM equipment 5 is well known to those skilled in the art, and is not directly related to the present invention, so that the description of the detailed configuration is omitted.

In FIG. 5, the methods of detecting a hindrance in CN Link and of detecting the recovery and the RESET procedures started by instructions from CN/RNC are well known to those skilled in the art, and is not directly related to the present invention, so the description of the detailed configuration is omitted.

In FIG. 6, the architecture of the initial CN connection request (RRC: Initial Direct Transfer message) from UE 3, the architecture of the routing information (Intra Domain NAS Node Selector), the details of NAS Node Selection Function and CS IMSI Paging Function are not directly related to the present invention, therefore details of the functions are omitted.

It should be noted that either a MSC Node integrated with a MGW or a separated MSC Node may be used as a MSC herein.

### (Description of operation)

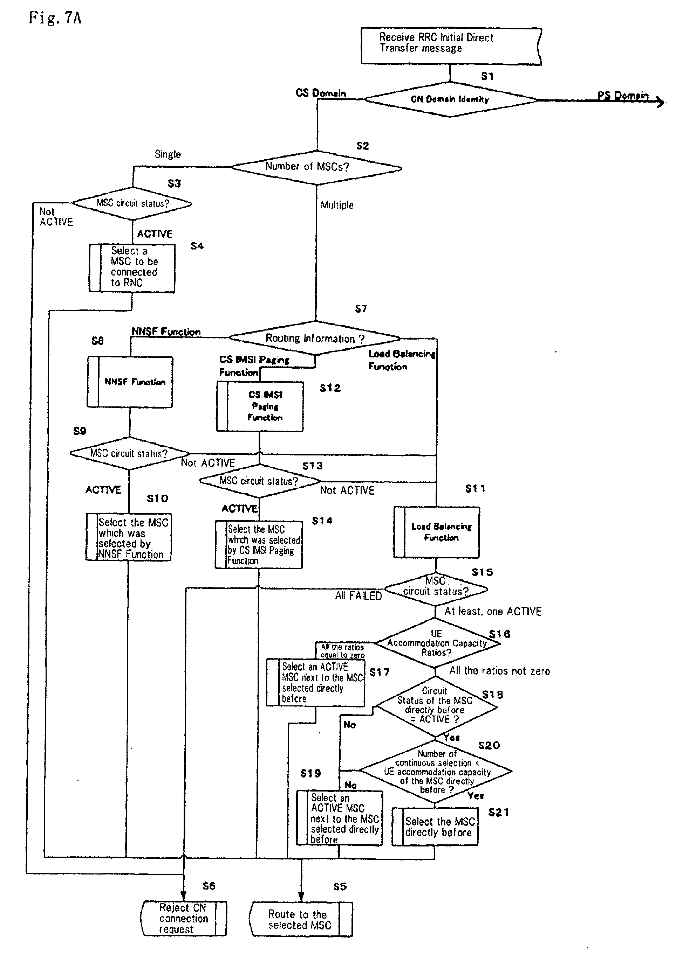

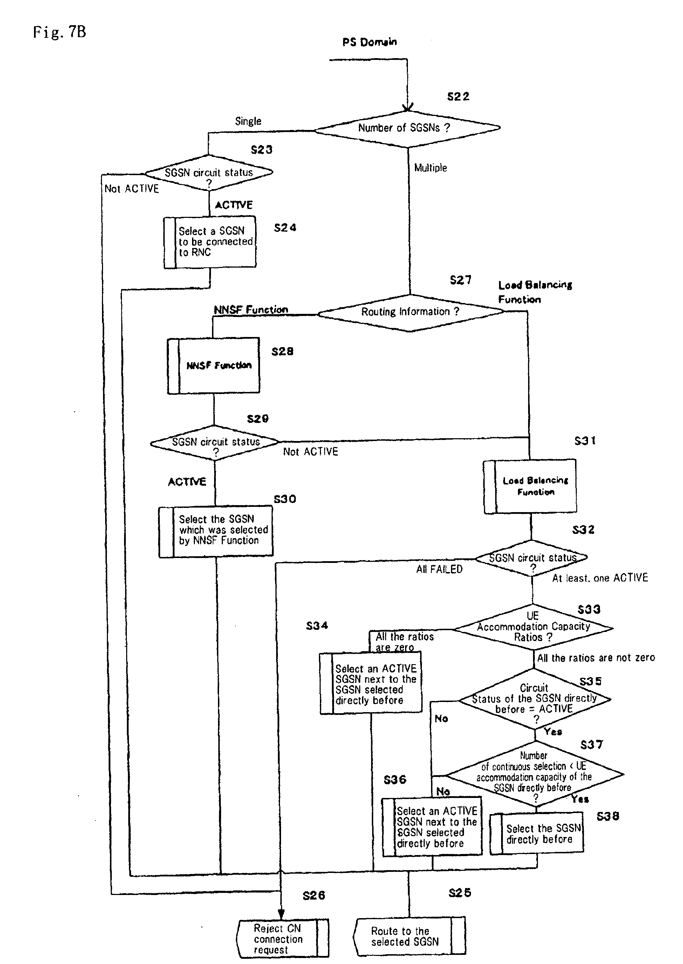

Next, the operation of RNC 1 (specifically, processor 12) in routing a CN connection request from UE 3 to CN 2 will be described using a flow chart shown in FIGS. 7A and 7B. In the following description it should be noted that the operation which processor 12 performs is described as the operation of RNC 1. Also, message processor 12a performs an analyzing process as a result of a CN connection request. Routing processor 12b performs a routing destination determining process. Transfer unit 12c performs a process of supplying the CN connection request to CN 2.

In FIG. 7A, Upon receipt of an initial CN connection request from UE 3, RNC 1 checks the CN domain identity indicated by the CN connection request first (Step S1).

When CN Domain Identity = CS Domain, RNC 1 checks the number of MSCs that are being connected to RNC 1 (Step S2).

If only one MSC is connected to RNC 1, RNC 1 refers to circuit status table 11 b (see FIG. 5) of that MSC (Step S3).

If the circuit information on that MSC is ACTIVE, RNC 1 selects the MSC that is connected to RNC 1 as the CN to which the CN connection request should be supplied (Step S4). Subsequently, RNC 1 routes the CN connection request to the MSC (Step S5).

If the circuit information on the MSC that is connected to RNC 1 is not ACTIVE, RNC 1 rejects the initial CN connection request from UE 3 (Step S6).

If a plurality of MSCs are being connected to RNC 1 (Step S2), RNC 1 checks the routing information (Intra Domain NAS Node Selector) contained in the CN connection request (RRC: Initial Direct Transfer message) (see FIG. 6) (Step S7).

If a NNSF Function has been selected in accordance with the routing information, RNC 1 selects a uniquely designated MSC in accordance with the NNSF Function (Step S8). Subsequently, RNC 1 refers to circuit status table 11 b (see FIG. 5) for that MSC (Step S9).

If the circuit information on that uniquely selected MSC is ACTIVE, RNC 1 selects this MSC as the CN to which the CN connection request should be supplied (Step S10). Subsequently, RNC 1 routes the CN connection request to the selected MSC (Step S5).

At Step S9, if the circuit information on the uniquely selected MSC is not ACTIVE, RNC 1 selects the Load Balancing Function (Step S11).

Here, at Step S7, when the CS IMSI Paging Function is selected in accordance with the routing information, RNC 1 selects a uniquely designated MSC in accordance with CS IMSI Paging Function. Subsequently, RNC 1 refers to circuit status table 11 b (see FIG. 5) for that MSC (Step S13).

If the circuit information on that uniquely selected MSC is ACTIVE, RNC 1 selects the MSC as the CN to which the CN connection request should be supplied (Step S14). Subsequently, RNC 1 routes the CN connection request to the selected MSC (Step S5).

At Step S13, if the circuit information on the uniquely selected MSC is not ACTIVE, RNC 1 selects the Load Balancing Function (Step S11).

When the Load Balancing Function was selected, RNC 1 refers to UE capacity ratio table 11 a for individual CNs (see FIG. 4) and circuit status table 11 b for individual CNs (see FIG. 5).

When the circuit information regarding all MSCs is FAILED (Step S15), RNC 1 rejects the initial CN connection request from UE 3 (Step S6).

On the other hand, if the circuit information regarding at least one MSC is ACTIVE (Step S15), RNC 1 selects a MSC to which the CN connection request should be supplied, in accordance with the UE accommodation capacity ratios of the MSCs that are ACTIVE. Subsequently, RNC 1 routes the CN connection request to the selected MSC.

Specifically, if the capacity ratios (accommodation information) of all the MSCs that are ACTIVE are zero (Step S16), RNC 1 selects those MSCs in order. RNC 1 routes the CN connection request to the selected MSC (Steps S17 and S5).

Here, RNC 1 has stored the MSC that was selected directly before, and at Step S17 RNC 1 selects the MSC at the place next to the MSC that was selected directly before (for example, in the order based on the MSC number) from the MSCs that are ACTIVE, as the MSC to which the CN connection request should be supplied.

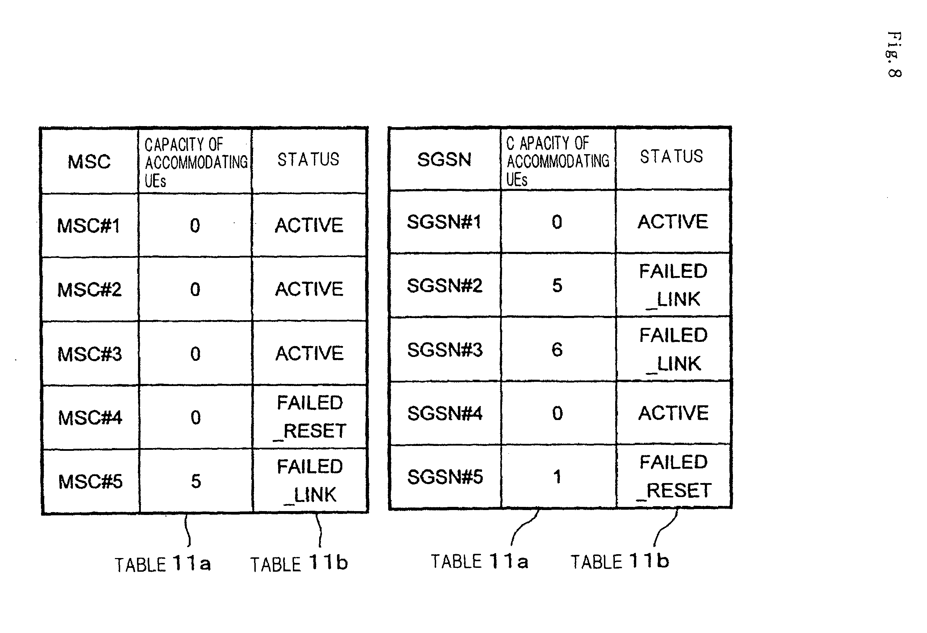

For example, when table 11 a and table 11 b are in the states shown in FIG. 8, RNC 1 selects MSC#1, MSC#2 and MSC#3 in the mentioned order at Step S17. Thereafter, RNC 1 selects MSC#1 and MSC#2, ···.

When, of the MSCs that are ACTIVE, the capacity ratio (accommodation information) of at least one MSC is not zero (Step S16), RNC 1 selects MSC to which the CN connection request should be supplied, in order, in accordance with the UE accommodation capacity ratios (accommodation information) of the MSCs having non-zero capacity ratios (accommodation information).

Specifically, RNC 1 has stored the MSC that was selected directly before and has stored the number of times that the MSC was continuously selected, and if the circuit status of the MSC that was selected directly before is not ACTIVE (Step S18), RNC 1 selects from the MSCs that are ACTIVE, the MSC at the place next to the MSC that was selected directly before (for example, in the order based on the MSC number) as the MSC to which CN connection request should be supplied (Step S19).

When the MSC that was selected directly before is ACTIVE (Step S18), RNC 1 compares the UE accommodation capacity ratio (accommodation information) of the MSC with the number of times that the MSC was continuously selected.

If the number of times of continuous selection is equal to or greater than the UE accommodation capacity ratio of that MSC (Step S20), RNC 1 selects from the MSCs that are ACTIVE, the MSC at the place next to the MSC that was selected directly before as the MSC to which CN connection request should be supplied (Step S19).

If the number of times of continuous selection is smaller than the UE accommodation capacity ratio of that MSC (Step S20), RNC 1 selects the MSC that was selected directly before once again as the MSC to which a CN connection request should be supplied (Step S21).

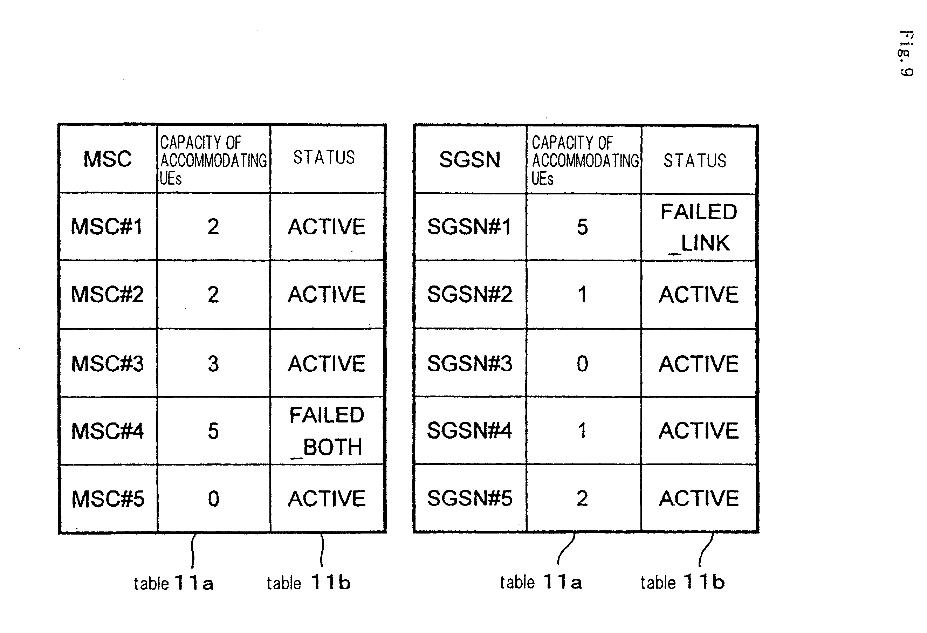

In the example of table 11a and table 11b shown in FIG. 9, the capacity ratios of MSC#1, MSC#2, MSC#3 and MSC#5 that are being ACTIVE are 2:2:3:0, hence RNC 1 selects the MSC in the order of [MSC#1, MSC#1, MSC#2, MSC#2, MSC#3, MSC#3 and MSC#3] in the Load Balancing Algorithm and routes the CN connection request to the selected MSC. Thereafter, RNC 1 selects MSC in the order of MSC#1, MSC#1, MSC#2, MSC#2, ....

In contrast, at Step S1, when CN Domain Identity = PS Domain, RNC 1 checks the number of SGSNs that are being connected to RNC 1 (Step S22).

If only one SGSN is connected to RNC 1, RNC 1 refers to circuit status table 11 b (see FIG. 5) of that SGSN (Step S23).

If the circuit information on that SGSN is ACTIVE, RNC 1 selects the SGSN that is connected to RNC 1 as the CN to which the CN connection request should be supplied (Step S24). Subsequently, RNC 1 routes the CN connection request to the SGSN (Step S25).

If the circuit information on the SGSN that is connected to RNC 1 is not ACTIVE, RNC 1 rejects the initial CN connection request from UE 3 (Step S26).

If a plurality of SGSNs are being connected to RNC 1 (Step S22), RNC 1 checks the routing information (Intra Domain NAS Node Selector) contained in the CN connection request (RRC: Initial Direct Transfer message) (see FIG. 6) (Step S27).

If a NNSF Function has been selected in accordance with the routing information, RNC 1 selects a uniquely designated SGSN in accordance with the NNSF Function (Step S28). Subsequently, RNC 1 refers to circuit status table 11 b (see FIG. 5) for that SGSN (Step S29).

If the circuit information on that uniquely selected SGSN is ACTIVE, RNC 1 selects this SGSN as the CN to which the CN connection request should be supplied (Step S30). Subsequently, RNC 1 routes the CN connection request to the selected SGSN (Step S25).

At Step S29, if the circuit information on the SGSN that was uniquely selected is not ACTIVE, RNC 1 selects Load Balancing Function (Step S31).

When Load Balancing Function was selected, RNC 1 refers to UE capacity ratio table 11 a for individual CNs (see FIG. 4) and circuit status table 11 b for individual CNs (see FIG. 5).

When the circuit information regarding all SGSNs is FAILED (Step S32), RNC 1 rejects the initial CN connection request from UE 3 (Step S26).

On the other hand, if the circuit information regarding at least one SGSN is ACTIVE (Step S32), RNC 1 selects a SGSN to which the CN connection request should be supplied, in accordance with the UE accommodation capacity ratios of the SGSNs that are ACTIVE. Subsequently, RNC 1 routes the CN connection request to the selected SGSN.

Specifically, if the capacity ratios (accommodation information) of all the SGSNs that are ACTIVE are zero (Step S33), RNC 1 selects those SGSNs in order. RNC 1 routes the CN connection request to the selected SGSN (Steps S34 and S25).

Here, RNC 1 has stored the SGSN that was selected directly before, and at Step S34 RNC 1 selects the SGSN at the place next to the SGSN that was selected directly before (for example, in the order based on the SGSN number) from the SGSNs that are ACTIVE, as the SGSN to which the CN connection request should be supplied.

For example, when table 11 a and table 11 b are in the states shown in FIG. 8, RNC 1 selects SGSN#1 and SGSN#4 in the mentioned order. Thereafter, RNC 1 selects SGSN#1 and SGSN#4, ···.

When, of the SGSNs that are ACTIVE, the capacity ratio (accommodation information) of at least one SGSN is not zero (Step S33), RNC 1 selects SGSN to which the CN connection request should be supplied, in order, in accordance with the UE accommodation capacity ratios (accommodation information) of the SGSNs having non-zero capacity ratios (accommodation information).

Specifically, RNC 1 has stored the SGSN that was selected directly before and has stored the number of times the SGSN was continuously selected, and if the circuit status of the SGSN that was selected directly before is not ACTIVE (Step S35), RNC 1 selects from the SGSNs that are ACTIVE, the SGSN at the place next to the SGSN that was selected directly before (for example, in the order based on the SGSN number) as the SGSN to which the CN connection request should be supplied (Step S36).

When the SGSN that was selected directly before is ACTIVE (Step S35), RNC 1 compares the UE accommodation capacity ratio (accommodation information) of the SGSN with the number of times that the SGSN was continuously selected.

If the number of times of continuous selection is equal to or greater than the UE accommodation capacity ratio of that SGSN (Step S37), RNC 1 selects from the SGSNs that are ACTIVE, the SGSN at the place next to the SGSN that was selected directly before as the SGSN to which the CN connection request should be supplied (Step S36).

If the number of times of continuous selection is smaller than the UE accommodation capacity ratio of that SGSN (Step S37), RNC 1 selects the SGSN that was selected directly before once again as the SGSN to which the CN connection request should be supplied (Step S38).

In the example of table 11a and table 11b shown in FIG. 9, the capacity ratios of SGSN#2, SGSN#3, SGSN#4 and SGSN#5 that are being ACTIVE are 1:0:1:2, hence RNC 1 selects the SGSN in the order of [SGSN#2, SGSN#4, SGSN#5 and SGSN#5] in the Load Balancing Algorithm and routes the CN connection requests. Thereafter, RNC 1 selects SGSN in the order of SGSN#2, SGSN#4, SGSN#5, SGSN#5, ···.

As described heretofore, in the present exemplary embodiment, the following effects can be obtained.

The first effect is that Load Balancing can be realized by routing in accordance with the capacity ratios because RNC 1 holds UE accommodation capacity ratio table 11a for all the CNs that are connected to RNC 1.

Accordingly, RNC 1 is able to route CN connection requests to CNs in a well-balanced manner in accordance with the capacity ratios of individual CNs.

The second effect is that RNC 1 is able to route the connection from UE 3 to an available CN because RNC 1 holds circuit status table 11 b for all CNs that are connected thereto.

Accordingly, it is possible, for example, to prevent a CN connection request from being routed to a CN that has an anomaly in its circuit status.

The third effect is that Load Balancing algorithm is a simple method that is implemented by round-robin selection, hence it is possible to save the processing capacity of the processor.

The fourth effect is that, since the operator is able to input UE accommodation capacity ratio table 11 a for all the CNs that are connected to RNC 1, it is possible to remove UEs that are being connected to a CN by setting the capacity of the CN to zero in advance when, for example, the CN needs to be left out or when the CN needs to be upgraded.

Next, a RNC of the second exemplary embodiment according to the present invention will be described. The basic configuration of the RNC of the second exemplary embodiment is the same as RNC 1 shown in FIG. 2, except that the RNC of the second exemplary embodiment is further manipulated in its Load Balancing Function.

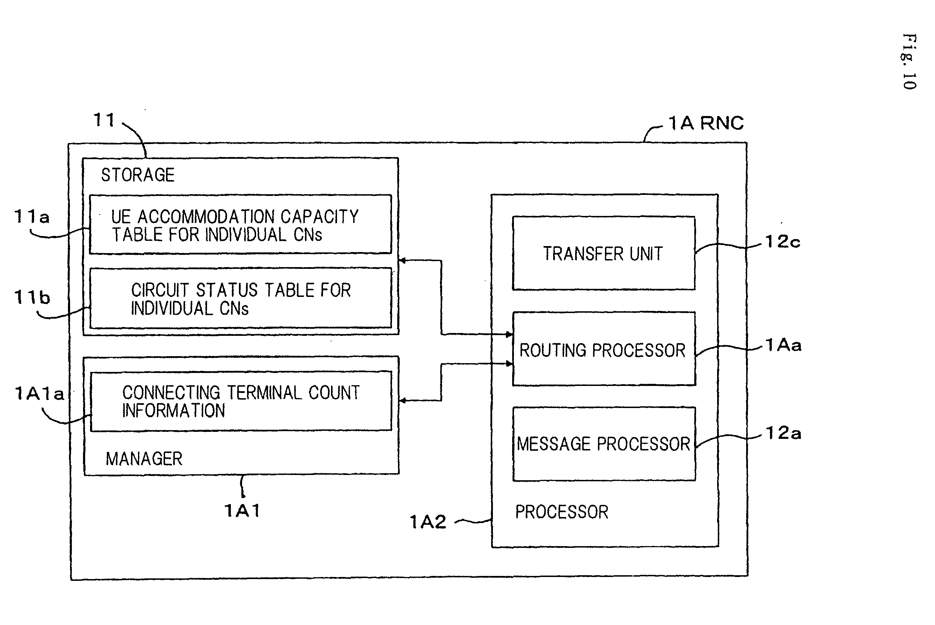

FIG. 10 is a block diagram showing an exemplary embodiment of RNC 1A of the second exemplary embodiment. Here, in FIG. 10, the same components as those shown in FIG. 3 are allotted with the same reference numerals.

In FIG. 10, RNC 1A includes storage 11, manager 1A1 and processor 1A2. Processor 1A2 includes message processor 12a, routing processor 1Aa and transfer unit 12c.

Manager 1A1 can be generally described as managing means. Processor 1A2 can be generally described as processing means.

Manager 1A1 manages connecting terminal count information 1A1a that represents the number of UEs that are accommodated in each CN (the number of UEs connected to a CN: lu Signaling Connection count). Here, the operator inputs connecting terminal count information 1A1a using OAM equipment 5.

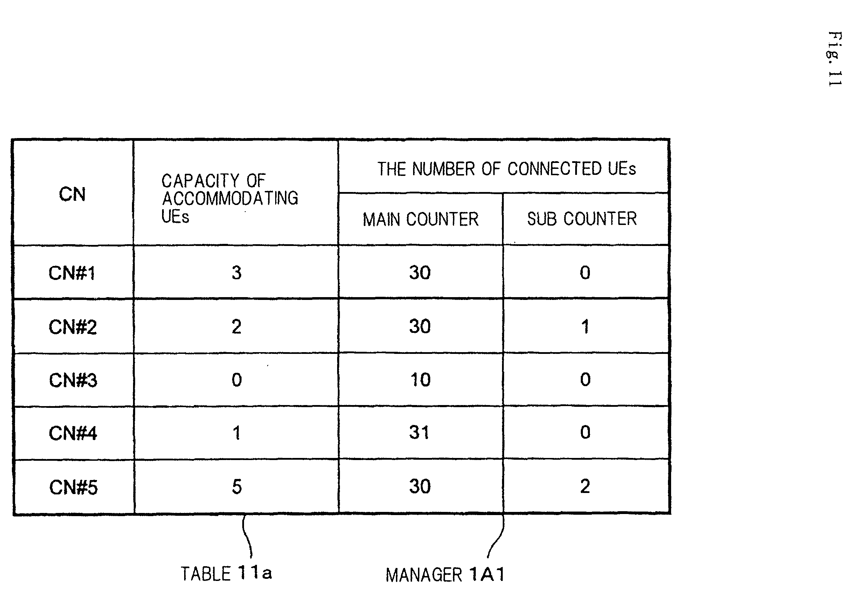

FIG. 11 is an illustrative diagram showing an exemplary embodiment of manager 1A1 for managing the connecting terminal count information.

In FIG. 11, manager 1A1 includes counters for counting the number of UEs connected to each CN (MSC or SGSN) (Iu Signaling Connection count). Specifically, each CN is provided with a main counter and a sub counter.

The count on each sub counter is counted up or down by 1 in accordance with the change in the lu Signaling Connection count for the associated CN.

When the count on the sub counter comes to be equal to the value of the UE accommodation capacity of the associated CN, the count on the main counter for the sub counter is increased by 1 and the count value on the sub counter is set to 0. That is, the upper limit of the count on the sub counter corresponds to the UE accommodation capacity shown in UE accommodation capacity ratio table 11 a for each CN.

The count on the sub counter is counted down by 1 from 0, the count on the associated main counter is borrowed, and the count on the sub counter is set at a value equal to "UE accommodation capacity for the associated CN - 1 ".

When UE accommodation capacity ratio is 0 or 1, the sub counter is not used and the count on the sub counter constantly takes a value of 0 while the main counter is counted up or down by 1 in accordance with the increase or decrease in the lu Signaling Connection count.

Further, when the operator has changed the UE accommodation capacity ratio table for individual CNs shown in FIG. 4, using OAM equipment 5, the settings of the main and sub counters are recalculated. The formulae for recalculation are as follows:
Old_Weight_Factor: UE accommodation capacity before change Old_Main_Couter: main counter before change
Old_Sub_Counter: sub counter before change
New_Weight_Factor: UE accommodation capacity after change New_Main_Counter: main counter after change
New_Sub_Counter: sub counter after change
Case 1: Old_Weight_Factor = 0,
Csae 2: New_Weight_Factor = 0,
New_Main_Counter= Old_Main_Counter,
New_Sub_Counter= Old_Sub_Counter,
Case 2: New_Weight_Factor > 0,
New_Main_Counter = Old_Main_Counter/New_Weight_Factor: decimal digits discarded
New_Sub_Counter = Old_Main_Counter modulo New_Weight_Factor Case 1: Old_Weight_Factor > 0,
Case 2: New_Weight_Factor = 0,
New_Main_Counter = Old_Main_Counter * Old_Weight_Factor
New_Sub_Counter= 0
Case 2: New_Weight_Factor > 0,
New_Main_Counter = (Old_Main_Counter * Old_Weight_Factor)/
New_Weight_Factor: decimal digits discarded
New_Sub_Counter = (Old_Main_Counter * Old_Weight_Factor)/modulo
New_Weight_Factor

Returning to FIG. 10, processor 1A2, when receiving a CN connection request from UE 3, selects a CN to which the CN connection request should be supplied, from a plurality of CNs, based on the accommodation information (see FIG. 4) and circuit information (see FIG. 5) in storage 11 and in connecting terminal count information 1A1a (see FIG. 11) managed by manager 1A1. Processor 1A2 routes the CN connection request to the selected CN.

Upon receipt of the analyzed result from message processor 12a, routing processor 1Aa selects a CN to which the CN connection request should be supplied, referring to the information in storage 11 and the information in manager 1A1 in accordance with the analyzed result. Routing processor 1Aa supplies the selection result and the CN connection request to transfer unit 12c.

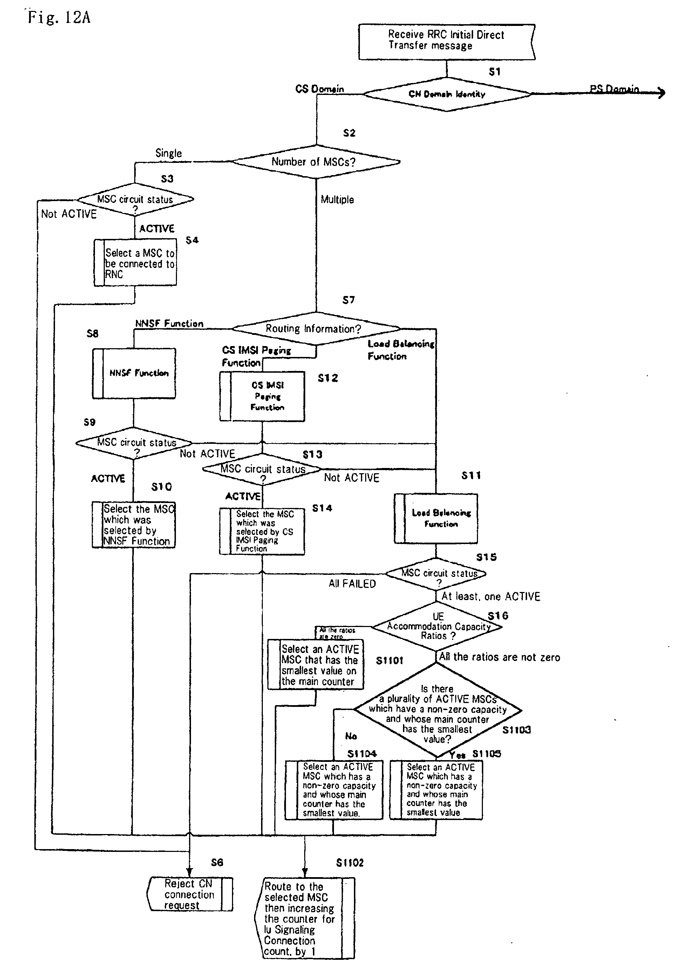

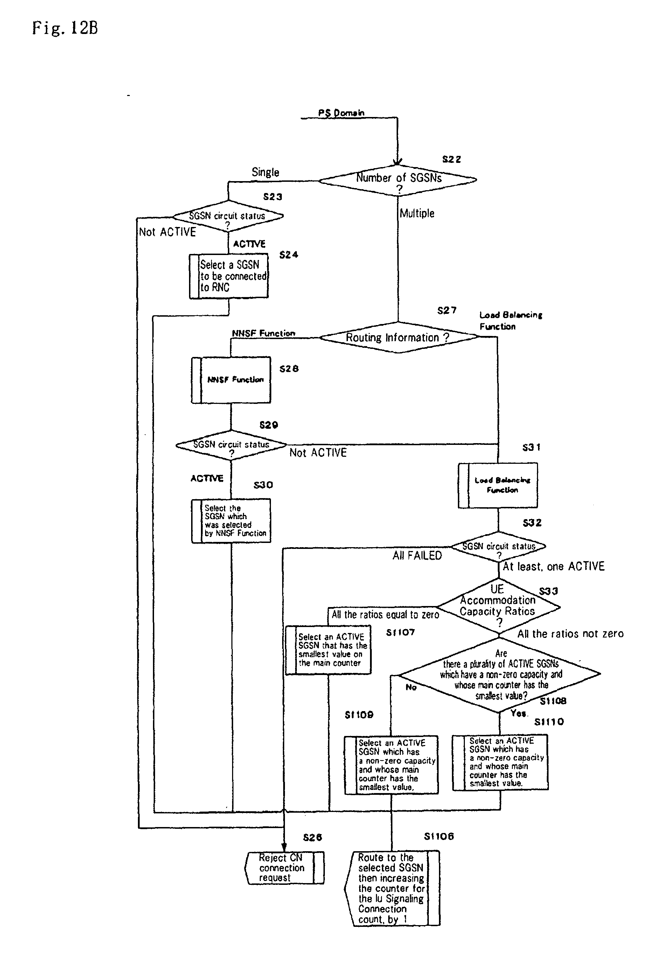

Next, the routing operation of RNC 1A will be described with reference to the flow chart shown in FIGS. 12A and 12B. In FIGS. 12A and 12B, the same procedures as those shown in FIGS. 7A and 7B are allotted with the same reference numerals. Herein, the routing operation of RNC 1A will be described focusing on the points that are different from the procedures shown in FIGS. 7A and 7B.

In the following description, it should be noted that the operation that processor 1A2 performs is described as the operation of RNC 1A. Also, message processor 12a performs an analyzing process as a result of a CN connection request. Routing processor 1Aa performs a routing destination determining process. Transfer unit 12c performs a process of supplying a CN connection request to a CN.

At Step S16 in FIG. 12A, when the capacity ratios (accommodation information) of all the MSCs that are ACTIVE are zero, RNC 1A selects the MSC whose count on the associated main counter is the smallest, as the MSC to which the CN connection request should be supplied, from the MSCs that are ACTIVE (Step S1101). Subsequently, RNC 1A routes the CN connection request to the selected MSC (Step S1102). At this timing, RNC 1A increases the count on the main counter for the selected MSC, by 1.

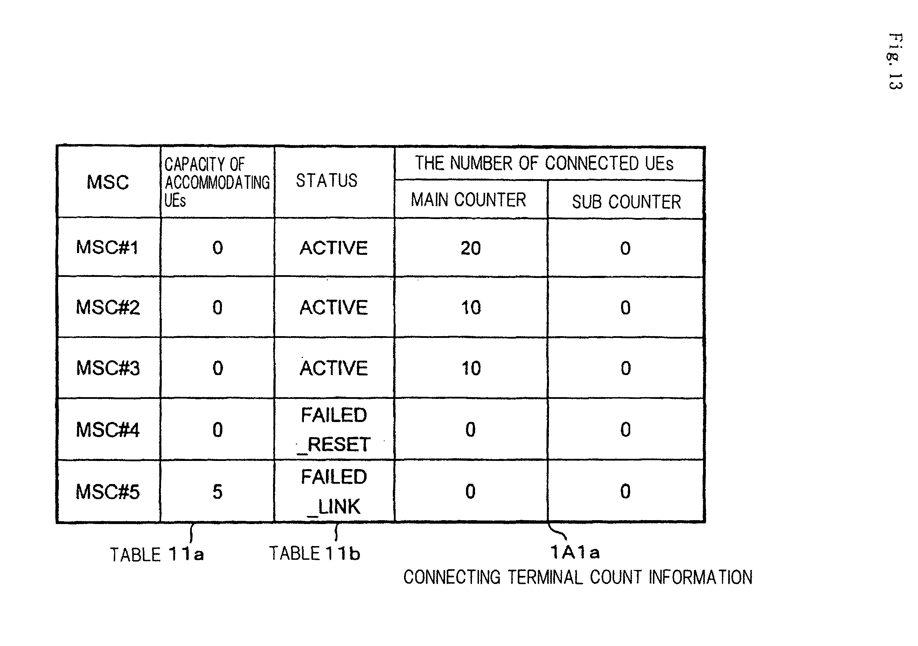

If, at Step S1101, there are multiple ACTIVE MSCs whose count on the main counter is the smallest, RNC 1A selects the MSC having the smallest MSC number. Subsequently, RNC 1A routes the CN connection request to that MSC. Then, RNC 1A increases the count on the main counter of the MSC, by 1. In the example of FIG. 13, RNC 1A selects MSC#2 and routes the CN connection request to MSC#2 and increases the count on the main counter of MSC#2 by 1.

When at least one of the capacity ratios (accommodation information) of all the MSCs that are ACTIVE is not zero (Step S16), RNC 1A selects the MSC whose count on the main counter is the smallest, from the MSCs having non-zero capacity ratios (Step S1104). Subsequently, RNC 1A routes the CN connection request to the MSC and increases the count on the sub counter of the MSC, by 1. (Step S1102).

If there are multiple MSCs whose count on the main counter is the smallest (Step S1103), RNC 1A selects the MSC having the smallest count on the sub counter, from the multiple MSCs (Step S1105). Subsequently, RNC 1A routes the CN connection request to that MSC. Then, RNC 1A increases the count on the sub counter of the MSC, by 1 (Step S1102).

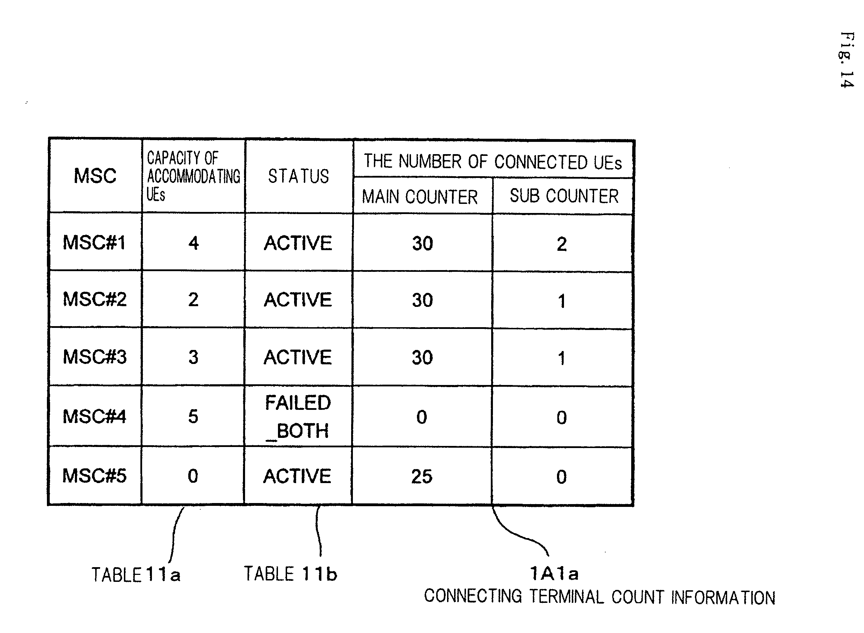

If, at Step S1105, there are multiple MSCs whose count on the sub counter is the smallest, RNC 1A selects the MSC having the smallest MSC number. Subsequently, RNC 1A routes the CN connection request to that MSC. Then, RNC 1A increases the count on the sub counter of the MSC, by 1. In the example of FIG. 14, RNC 1A selects MSC#2 and routes the CN connection request to MSC#2 and increases the count on the main counter of MSC#2 by 1 and resets the count on the sub counter to zero.

Since the operation of SGSN selection (see FIG. 12B) is similar to the operation for MSC selection, a detailed description is omitted.

In the above exemplary embodiment, the Load Balancing Function was only described with reference to the case where at least one of the MSCs is ACTIVE. That is, when a CN was selected based on the NNSF Function or the CS IMSI Paging Function, or when a connection request for the RNC is made from a CN due to RNC relocation (SRNS Relocation), the main/sub counters are counted up.

When a RNC-CN connection is released (lu Release), RNC 1A decreases the count on the sub counter by 1. If the count on the sub counter is decreased by 1 from 0, the value on the main counter decreases by 1 and the value on the sub counter is set at a value equal to "UE-accommodation capacity ratio - 1".

When the RNC system is restarted or the CN system is restarted, these counters are both initialized at zero.

Similarly to the cases where the RNC is partly restarted or the CN system is partly restarted, these main/sub counters are decreased by as many numbers as the number of multiple UE connection counts (lu Signaling Connection count).

In the above way, in the exemplary embodiment, RNC 1A holds a table that represents the number of UEs connected to each CN (lu Signaling Connection count) and increases or decreases the counter whenever a connection is established or released. Accordingly, it is possible to obtain the effect of realizing Load Balancing in accordance with the UE accommodation capacity ratios of individual CNs.

Here, in each of the above exemplary embodiments, the Load Balancing Function of the RNC can be modified as follows.

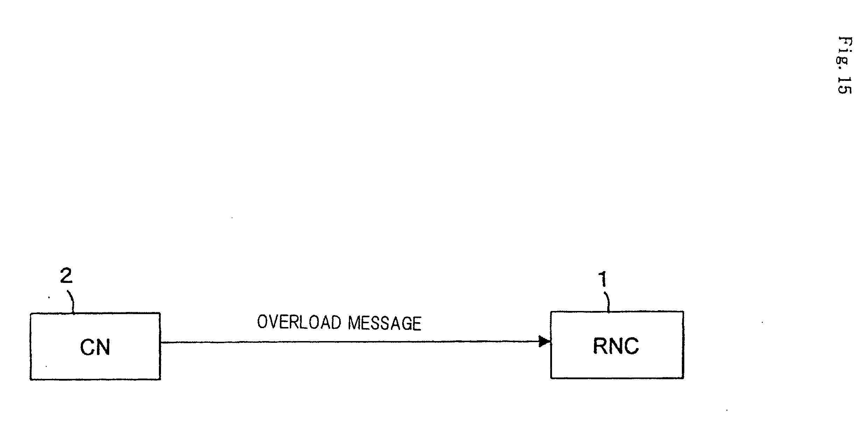

FIG. 15 is a block diagram for illustrating the third exemplary embodiment of RNC 1.

In FIG. 15, CN 2 transmits an overload message to RNC 1 when the processing capacity approaches its limit (for example, the processing load exceeds the permissible processing range).

Processor 12 in RNC 1, when receiving an overload message from CN 2, regards the CN 2 as being in an overloaded state for a fixed length of time (until an unillustrated overload timer reaches the set time).

If processor 12 receives an overload message once again before the overload timer reaches the set time, processor 12 extends the overload timer a fixed length of time.

During activation of the overload timer, processor 12 temporarily sets the UE accommodation capacity of the CN which is in the overloaded state, at the minimum value (e.g., 0), without referring to the setting from OAM equipment 5. As a result, according to the flowcharts shown in FIGS. 7A and 7B and in 12A and 12B, it is possible to prevent the CN that is in the overload state from being selected by RNC 1, that is, it is possible to prevent the CN connection request from being routed to that CN.

In the above way, in the exemplary embodiment, when RNC 1 has received an overload message from CN 2, the overload timer is activated while the UE accommodation capacity of the CN that is in the overloaded state is set at 0. Accordingly, it is possible to obtain the effect of executing Load Balancing so that no CN connection request will be routed to CN 2 in its overloaded state.

Here, this exemplary embodiment may be applied to RNC 1A (specifically, processor 1 A2) shown FIG. 10.

According to each of the above exemplary embodiments, the core node to which a CN connection request is supplied is selected based on the accommodation information. The accommodation information represents the capacity of each core node to accommodate communication terminals.

Accordingly, the radio network controller is able to route connection requests to core nodes in a well-balanced manner in accordance with the capacities of core nodes for accommodating communication terminals.

Preferably, said storage further stores circuit information for each core node that represents whether the circuit status of the core node is normal or not; and said processor, when receiving said connection request, selects a core node to which said connection request should be supplied, from said multiple core nodes, in accordance with the accommodation information and circuit information stored in said storing means, and routes said connection request to the selected core node.

According to the above exemplary embodiments, it is possible, for example, to prevent a connection request from being routed to a core node whose circuit status is abnormal.

Preferably, the radio network controller further comprises a manager for managing connecting terminal count information that represents the number of communication terminals being accommodated in the core node for each core node, wherein said processor, when receiving said connection request, selects a core node to which said connection request should be supplied, from said multiple core nodes, in accordance with the accommodation information and circuit information stored in said storage and the connecting terminal count information managed by said manager, and routes said connection request to the selected core node.

According to the above exemplary embodiments, it is possible, for example, to select a core node to which a connection request is supplied, taking into account the number of communication terminals that are accommodated by every core node.

Preferably, said processor, when receiving an overload message transmitted from a core node whose processing load exceeds the range of permissible processing load, sets the accommodation information in the core node that transmitted the overload message, to the smallest value during a fixed length of time after reception of the message.

According to the above exemplary embodiments, it is possible to prevent a communication terminal from being routed to a core node that has transmitted an overload message.

An exemplary advantage according to the present invention is that connection requests can be routed in a well-balanced manner in accordance with the capacities of individual core nodes for accommodating communication terminals.

While an exemplary embodiment of the present invention has been described using specific terms, such description is for illustrative purposes only, and it is to be understood that changes and variations may be made without departing from the scope of the following claims.

Each feature disclosed in this specification (which term includes the claims) and/or shown in the drawings may be incorporated in the invention independently of other disclosed and/or illustrated features.

The text of the abstract filed herewith is repeated here as part of the specification.

In a preferable embodiment of the invention a radio network controller is connected to radio base station equipment for communicating with communication terminals and also is connected to a plurality of core nodes that perform connecting processes of the same kind, and includes: for each of the core nodes, a storage for storing accommodation information that represents the capacity of the core node for accommodating the communication terminals; and a processor which, when receiving a connection request from the communication terminal by way of the radio base station equipment, selects a core node to which the connection request is supplied, from the plurality of core nodes, in accordance with the accommodation information stored in the storage, and routes the connection request to the selected core node.

## Claims

1. A radio network controller for connection to radio base station equipment for communicating with communication terminals, said radio network controller being connectable to a plurality of core nodes that perform connection processes of the same kind, said radio network controller comprising:
means for storing accommodation information for each core node representing a capacity of that core node for accommodating connections with said communication terminals; and
processing means for selecting a core node to which a connection request from a communication terminal should be supplied, from said plurality of core nodes, in dependence on accommodation information stored in said storing means, and for routing the connection request to the selected core node.

2. The radio network controller according to claim 1, wherein:
said storing means is configured for storing circuit information for each core node, wherein said circuit information represents whether a circuit status of the core node is normal or not; and
said processing means is configured for selecting said core node to which said connection request should be supplied in dependence on accommodation information and circuit information stored in said storing means.

3. The radio network controller according to claim 2, further comprising means for managing count information for each core node representing the number of communication terminal connections accommodated by that core node, wherein said processing means is configured for selecting said core node to which said connection request should be supplied in dependence on accommodation information and circuit information stored in said storing means, and count information managed by said managing means.

4. The radio network controller according to any one of claims 1 to 3, wherein said processing means is configured for receiving an overload message transmitted from an overloaded core node, and for setting the accommodation information for the overloaded core node to an associated value for a predetermined period of time after reception of the message.

5. A routing method for use by a radio network controller connected to radio base station equipment arranged for communication with communication terminals, and connected to a plurality of core nodes that perform connection processes of the same kind, said radio network controller including:
means for storing accommodation information for each core node representing a capacity of that core node for accommodating connections with said communication terminals;
and said routing method comprising:
selecting a core node to which a connection request should be supplied, from said plurality of core nodes, in dependence on accommodation information stored in said storing means; and
routing said connection request to said selected core node.

6. The routing method according to claim 5, wherein said storing means is configured for storing circuit information for each core node, wherein said circuit information represents whether a circuit status of the core node is normal or not; and wherein
said core node selection comprises selecting said core node to which said connection request should be supplied in dependence on accommodation information and circuit information stored in said storing means.

7. The routing method according to Claim 6, wherein said radio network controller further comprises managing means for managing count information that represents, for each core node, the number of communication terminal connections accommodated by that core node; and wherein
said core node selection comprises selecting a core node to which said connection request should be supplied in dependence on accommodation information and circuit information stored in said storing means and count information managed by said managing means.

8. The routing method according to any one of claims 5 to 7, further comprising setting accommodation information for an overloaded core node to an associated value for a predetermined period of time after reception of an overload message transmitted from the overloaded core node.
